# EUROPÄISCHE PATENTANMELDUNG

(11) **EP 3 073 310 A1**
(43) Veröffentlichungstag der Anmeldung: **28.09.2016**
(21) Anmeldenummer: 16161452.4
(22) Anmeldetag: 21.03.2016
(51) Int. Cl.: G02B 21/00, G02B 21/10

(54) **VORRICHTUNG ZUR BELEUCHTUNG EINER PROBE**

(30) Priorität: 27.03.2015 DE 102015104789
(71) Anmelder: J & M Analytik AG, 73457 Essingen (DE)
(72) Erfinder: Bauer, Manfred, 73431 Aalen (DE)
(74) Vertreter: Frey, Sven Holger

(57) **Zusammenfassung**

Eine erfindungsgemäße Vorrichtung (1) zur Beleuchtung einer Probe mittels einer Lichtscheibe (2) weist wenigstens eine Lichtquelle (3) zur Erzeugung eines Lichtbündels (4) und wenigstens eine Optik (5) mit einem Strahlengang (6) auf, welche zur Erzeugung der Lichtscheibe (2) aus dem Lichtbündel (4) ausgelegt ist. Dabei weist die Optik (5) wenigstens ein reflektives, sphärisches optisches Element (8) auf, wobei die wenigstens eine Lichtquelle (3) derart relativ zu einem Krümmungsmittelpunkt (M) des wenigstens einen reflektiven, sphärischen optischen Elements (8) beabstandet angeordnet ist, dass durch die Strahlablenkung des wenigstens einen reflektiven, sphärischen optischen Elements (8) beim Beleuchten die Lichtscheibe (2) erzeugt wird.

## Beschreibung

Die Erfindung betrifft eine Vorrichtung zur Beleuchtung einer Probe mittels einer Lichtscheibe. Die Erfindung betrifft ebenfalls ein Mikroskop.

Bei der Lichtscheibenmikroskopie dient eine Lichtscheibe bzw. im Querschnitt betrachtet ein Lichtstreifen der flächenartigen Beleuchtung einer Probenebene. Zum Erzeugen einer Lichtscheibe werden oftmals Laser verwendet, welche eine zu analysierende Probe sozusagen fortlaufend scannen. Das Erzeugen der Lichtscheibe selbst erfolgt meist mit Hilfe von achromatischen und/oder asphärischen Linsen, wie beispielsweise Zylinderlinsen, in Kombination mit einer bestimmten Wellenlänge des eingesetzten Lichts. Dennoch bleibt ein gewisser Restfehler in der Abbildung vorhanden. Wird die Lichtwellenlänge geändert, so kann dies zu einem signifikanten Versatz und nicht mehr tolerierbaren Abbildungsfehlern führen, so dass eine Änderung der Wellenlängen in einem bestehenden System zur Erzeugung von Lichtstreifen nahezu unmöglich ist.

Die DE 20 2011 110 077 U1 zeigt eine Anordnung zum Beleuchten einer Probe bei der SPIM (Selective Plane Illumination Microscope) -Mikroskopie auf, mit einer Lichtquelle zum Erzeugen eines Lichtbündels, mit Mitteln zum Erzeugen eines Lichtstreifens aus dem Lichtbündel, insbesondere zum im Wesentlichen flächenartigen Beleuchten einer Probe in einer Beleuchtungsebene aus wenigstens einer Richtung, mit wenigstens einem Objektiv, das eine Optik aufweist, die dazu ausgebildet und bestimmt ist, von der Probe ausgehendes Detektionslicht direkt oder indirekt einem Detektor zuzuführen, wobei die Optik des Objektivs mit dem Lichtstreifen in Wechselwirkung tritt, und mit einer der Optik des Objektivs nachgeschalteten Umlenkvorrichtung zum Umlenken des Lichtstreifens, wobei sich der Lichtstreifen nach dem Umlenken zum Beleuchten einer Probe in einem von Null Grad verschiedenen Winkel, insbesondere einem rechten Winkel, zur optischen Achse des Objektivs ausbreitet und/oder in einer optischen Achse des Objektivs nicht parallelen Ebene angeordnet ist.

Nachteilig bei den bekannten Konstruktionen und Vorrichtungen zur Bildung von Lichtscheiben ist, dass sie sehr kostenintensiv sind und meist nur mit einer bestimmten Wellenlänge verwendet werden können.

Es ist daher eine Aufgabe der vorliegenden Erfindung, eine Vorrichtung der eingangs erwähnten Art zu schaffen, welche die Nachteile des Stands der Technik vermeidet, insbesondere kostengünstig und universell einsetzbar ist.

Diese Aufgabe wird erfindungsgemäß durch eine Vorrichtung mit den in Anspruch 1 genannten Merkmalen gelöst. Die Unteransprüche betreffen vorteilhafte Ausführungsformen und Varianten der Erfindung.

Eine erfindungsgemäße Vorrichtung zur Beleuchtung einer Probe mittels einer Lichtscheibe weist wenigstens eine Lichtquelle zur Erzeugung eines Lichtbündels und wenigstens eine Optik oder ein optisches System auf, welche zur Erzeugung der Lichtscheibe aus dem Lichtbündel ausgelegt ist, mit einem Strahlengang, welcher insbesondere von der Lichtquelle zu einem Austrittsbereich der Vorrichtung oder einem Bereich in welchem die Lichtscheibe erzeugt wird, verläuft. Dabei weist die Optik wenigstens ein reflektives, sphärisches optisches Element auf, wobei die wenigstens eine Lichtquelle derart relativ zu einem Krümmungsmittelpunkt des wenigstens einen reflektiven, sphärischen optischen Elements beabstandet angeordnet ist, dass durch die Strahlablenkung des wenigstens einen reflektiven, sphärischen optischen Elements beim Beleuchten die Lichtscheibe erzeugt wird. Mit anderen Worten ist die Lichtquelle derart angeordnet, dass das reflektive, sphärische optische Element außeraxial beleuchtet wird und der daraus resultierende Astigmatismus genutzt wird, um eine Lichtscheibe in einem vorgegebenen Bereich zu erzeugen. Durch die Variation der Beabstandung der Lichtquelle zu dem Krümmungsmittelpunkt des zugehörigen reflektiven, sphärischen, optischen Elements kann die Ausdehnung, insbesondere die Breite, der durch die Reflexion des Lichtbündels resultierenden Lichtscheibe verändert werden, wodurch eine möglichst kostengünstige und definierte Lichtscheibe, ohne weitere Hilfskomponenten wie beispielsweise Linsen o. ä., erzeugt werden kann. In vorteilhafter Weise kann die zu beleuchtende Probe in einem Bereich angeordnet werden, in dem die Lichtscheibe eine Strahltaille, d. h. eine Einschnürung eines Fokus senkrecht zur Strahlrichtung bzw. zur Ausbreitungsrichtung des Lichts und/oder parallel zu einer Richtung, welche der Breitenausdehnung der Lichtscheibe entspricht, aufweist. Durch den Einsatz eines reflektiven, sphärischen, optischen Elements, insbesondere eines Kugelspiegels, welches wellenlängenunabhängig ist, können beliebige Lichtquellen eingesetzt werden, wodurch die erfindungsgemäße Vorrichtung universell einsetzbar ist. Somit kann auch eine Vielzahl von unterschiedlichen Proben beleuchtet werden. Durch das optische Design können Abbildungsfehler, insbesondere eine chromatische Aberration, nahezu ausgeschlossen werden. Die erfindungsgemäße Vorrichtung kann auf eine einfache Weise an Beleuchtungsund Detektionspfade bekannter Mikroskope adaptiert werden. Eine erfindungsgemäße Vorrichtung kann z. B. auch in der Spektroskopie Anwendung finden.

In einer vorteilhaften Ausführungsform kann die Lichtquelle wenigstens annähernd auf einer Ebene angeordnet sein, welche senkrecht zu einer optischen Achse des wenigstens einen reflektiven, sphärischen optischen Elements liegt. Unter optischer Achse kann dabei die Achse verstanden werden, die mit der Symmetrieachse des reflektiven, sphärischen optischen Elements übereinstimmt. Ein Scheitelpunkt und der Krümmungsmittelpunkt des wenigstens einen reflektiven, sphärischen optischen Elements können somit auf der optischen Achse des wenigstens einen reflektiven, sphärischen optischen Elements liegen. Als Scheitelpunkt kann ein Schnittpunkt der Spiegelkurve mit der Symmetrieachse angesehen werden.

Ein Hauptstrahl der Lichtquelle kann auf den Scheitelpunkt des wenigstens einen reflektiven, sphärischen optischen Elements gerichtet sein.

In einer vorteilhaften Ausführungsform der Erfindung kann die Ausdehnung, insbesondere die Breite, der Lichtscheibe verändert werden, indem der relative Abstand der wenigstens einen Lichtquelle zu dem Krümmungsmittelpunkt des wenigstens einen reflektiven, sphärischen optischen Elements variiert wird und/oder indem der Winkel, welcher die optische Achse des wenigstens einen reflektiven, sphärischen optischen Elements und der Hauptstrahl der Lichtquelle einschließen, variiert wird.

Von Vorteil ist es weiterhin, wenn ein Einfallswinkel des Hauptstrahls der Lichtquelle auf das wenigstens eine reflektive, sphärische optische Element und/oder ein Winkel, welchen die optische Achse des wenigstens einen reflektiven, sphärischen optischen Elements und der Hauptstrahl der Lichtquelle einschließen, zwischen 1° und 45°, insbesondere 22,5° beträgt. Bei einem Einfallswinkel von 22,5° weist die Lichtscheibe z. B. eine Ausdehnung von ca. 4 mm auf.

In einer vorteilhaften Ausführungsform der Erfindung kann die Lichtquelle eine Austrittsfläche eines Lichtwellenleiters aufweisen. An dem Lichtwellenleiter kann z. B. ein Laser angeschlossen werden.

Die Lichtquelle kann Wellenlängen im gesamten Spektralbereich aussenden, wodurch die Analysemöglichkeiten unterschiedlicher Proben vielfältig sind.

Der Lichtwellenleiter kann als Faser, vorzugsweise als Monomodefaser bzw. als Single-Mode-Faser ausgeführt sein. Derartige Fasern können aus Glas und/oder Kunststoff gebildet sein.

Die Lichtquelle kann wenigstens einen Laser und/oder wenigstens eine Leuchtdiode (LED) aufweisen. Bei Einsatz einer LED kann ein entsprechender Spalt vorgesehen sein. Ebenfalls denkbar als Lichtquelle ist ein Lichtspalt, ein LED-Array oder ein Laserdiodenarray.

Das der erfindungsgemäßen Vorrichtung zugehörige reflektive, sphärische, optische Element kann als Kugelspiegel ausgebildet sein. Durch die Verwendung eines Spiegels kann gewährleistet werden, dass bei der Beleuchtung keine chromatischen Abbildungsfehler erzeugt werden, wodurch die Vorrichtung weitgehend wellenlängenunabhängig ist. Dies bedeutet, dass Wellenlängen im Bereich zwischen ultraviolett bis Infrarot verwendet werden können.

Der Kugelspiegel bzw. das reflektive, sphärische, optische Element kann vorteilig einen Krümmungsradius von 30 mm bis 60 mm, insbesondere von 50mm aufweisen.

In einer weiteren vorteilhaften Ausführungsform kann die optisch wirksame Fläche des Kugelspiegels eine Bedampfung mit Aluminium bzw. eine dünne Aluminiumschicht aufweisen. Ebenso denkbar ist die Verwendung eines anderen Spiegels.

Weiterhin ist es von Vorteil, wenn die optisch wirksame Fläche des Kugelspiegels eine Oberflächengenauigkeit im Bereich von höchstens λ/4, vorzugsweise λ/8 aufweist, wobei λ die Wellenlänge der von der Lichtquelle erzeugten Strahlung ist.

In einer alternativen Ausführungsform kann die Optik ferner wenigstens ein Umlenkelement, insbesondere einen Umlenkspiegel und/oder wenigstens eine Aperturblende, aufweisen. Die Aperturblende kann im Bereich des reflektiven sphärischen optischen Elements angeordnet sein.

Durch ein Umlenkelement kann die Austrittsrichtung der Lichtscheibe beliebig, z. B. senkrecht zur optischen Achse des Mikroskopobjektivs, eingestellt werden. Durch den Einsatz einer Aperturblende kann die Form der Lichtscheibe, beispielsweise bezüglich ihrer Strahltaille bzw. ihres Fokus, entsprechende beeinflusst werden.

Ein erfindungsgemäßes Mikroskop zum Abbilden einer im Bereich eines Mikroskoptisches des Mikroskops anordenbaren Probe weist eine erfindungsgemäße Vorrichtung zur im Wesentlichen flächenartigen Beleuchtung der Probe in einer Beleuchtungsebene mittels einer Lichtscheibe aus wenigstens einer Richtung auf. In einer vorteilhaften optischen Anordnung ist es auch denkbar eine zu analysierende Probe von mehreren, insbesondere zwei Seiten zu beleuchten.

In einer vorteilhaften Ausführungsform der Erfindung kann das Mikroskop als inverses Mikroskop ausgeführt sein.

Die erfindungsgemäße Vorrichtung kann als separates Bauteil bzw. als Bausatz an ein handelsübliches Mikroskop, insbesondere an ein inverses Mikroskop angebracht werden. Eine derartige Nachrüstung eines Mikroskops macht es möglich kostengünstig und wellenlängenunabhängig die analytischen Methoden zu erweitern.

Die erfindungsgemäße Vorrichtung kann in vorteilhafter Weise in einem, insbesondere separaten Modul angeordnet oder ein Teil desselben sein, welches Aktuatoren zum, insbesondere relativen Verschieben oder, insbesondere linearen Positionieren der erfindungsgemäßen Vorrichtung und/oder der zu beleuchtenden Probe zueinander umfassen kann. Ein derartiges Modul kann als Bauteil bzw. Bausatz, z. B. zum Nachrüsten bestehender Mikroskope, vorgesehen sein.

Ein zugehöriges Verfahren zur Beleuchtung einer Probe mittels einer Lichtscheibe, wobei eine erfindungsgemäße Vorrichtung verwendet wird, umfasst die Erzeugung eines Lichtbündels, wobei aus dem Lichtbündel mittels einer Optik die Lichtscheibe erzeugt wird, wobei in der Optik wenigstens ein reflektives, sphärisches optisches Element verwendet wird, wobei das Lichtbündel in einem derartigen Einfallswinkel auf das wenigstens eine reflektive, sphärische, optische Element trifft, dass durch die außeraxiale bzw. außermittige Beleuchtung des reflektiven, sphärischen optischen Elements und insbesondere aufgrund des dadurch entstehenden Astigmatismus eine Lichtscheibe in dem Austrittsbereich erzeugt wird.

Nachfolgend wird die Erfindung anhand der Zeichnung prinzipmäßig näher erläutert.

### Es zeigen:

- Figur 1: eine vereinfachte schematische Darstellung einer erfindungsgemäßen Vorrichtung;
- Figur 2: eine schematische seitliche Ansicht eines Bereichs aus Figur 1;
- Figur 3: eine vereinfachte schematische Darstellung der erfindungsgemäßen Vorrichtung aus Figur 1 in perspektivischer Form;
- Figur 4: eine perspektivische Darstellung eines erfindungsgemäßen Mikroskops mit einer erfindungsgemäßen Vorrichtung, und
- Figur 5: eine perspektivische Ausschnittdarstellung des erfindungsgemäßen Mikroskops aus Figur 4.

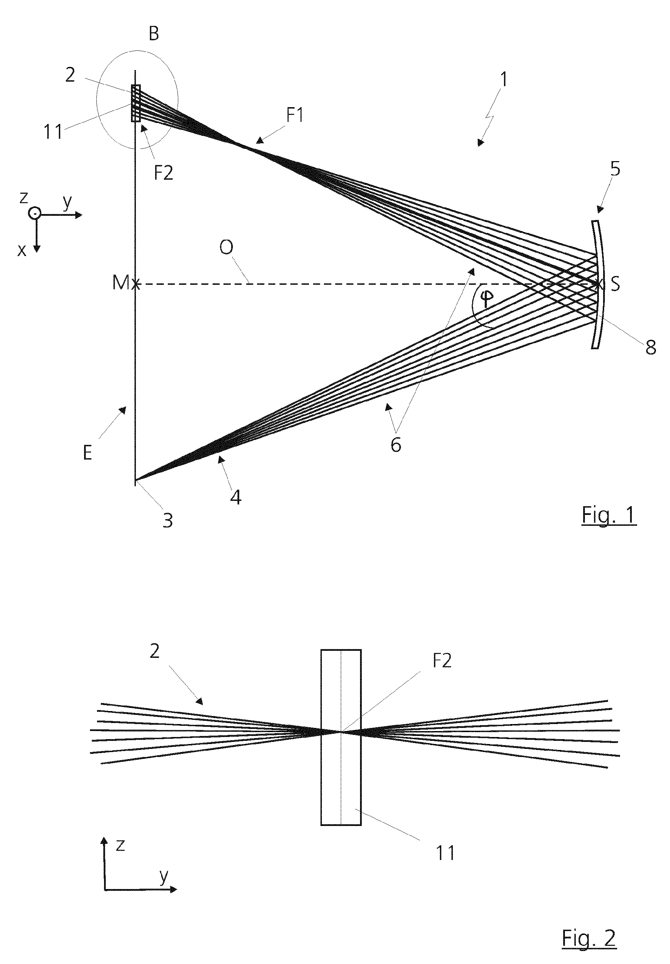

In Figur 1 ist eine erfindungsgemäße Vorrichtung 1 stark vereinfacht schematisch dargestellt. Zum besseren Verständnis ist ein Koordinatensystem mit x-, yund z-Achsen in den Figuren 1 bis 3 gezeigt. Die Vorrichtung 1 zur Beleuchtung einer in den Figuren als Probenkapillare 11 angedeuteten, Probe mittels einer Lichtscheibe 2, weist eine Lichtquelle 3, welche im vorliegenden Ausführungsbeispiel als Austrittsfläche einer Monomodefaser ausgebildet ist, zur Erzeugung eines Lichtbündels 4 auf. Alternativ können auch anderweitig ausgebildete Lichtwellenleiter als Lichtquelle genutzt werden. Der Lichtwellenleiter kann dabei bevorzugt als Faser ausgebildet sein, welche wiederum aus Glas und/oder Kunststoff gebildet sein kann. Der Lichtwellenleiter kann an seinem der Vorrichtung 1 abgewandten Ende z. B. mit einem Laser verbunden sein. Ebenfalls denkbar ist die Verwendung von Lasern und/oder Leuchtdioden als Lichtquelle 3. Weiterhin weist die Vorrichtung 1 eine Optik 5 mit einem Strahlengang 6 auf, welche zur Erzeugung der Lichtscheibe 2 in einem Beleuchtungsbereich mit der Probenkapillare 11 aus dem Lichtbündel 4 ausgelegt ist.

Dabei weist die Optik 5 ein reflektives, sphärisches optisches Element auf, welches als Kugelspiegel 8 ausgebildet ist. Der Kugelspiegel 8 weist im vorliegenden Ausführungsbeispiel einen Krümmungsradius von 50 mm auf. Selbstverständlich sind auch andere Ausführungsformen denkbar, bei welchen Krümmungsradien im Bereich zwischen 30 mm und 60 mm verwendet werden. Weiterhin weist der Kugelspiegel 8 eine optisch wirksame mit Aluminium bedampfte Fläche auf, welche nicht näher dargestellt ist und welche eine Oberflächengenauigkeit von λ/8 aufweist. Selbstverständlich kann eine derartige Oberflächengenauigkeit auch variieren und z. B. höchstens λ/4 betragen. Die optisch wirksame Fläche oder der gesamte Kugelspiegel 8 oder auch nur Teile des Kugelspiegels 8 können alternativ auch aus einem anderen Metall oder aus einem Spiegelsubstrat mit einer Bedampfung gebildet sein. Die Optik 5 kann neben dem Kugelspiegel 8 auch weitere Elemente, wie wenigstens einen Umlenkspiegel oder wenigstens eine Aperturblende, umfassen, welche nicht dargestellt sind.

Die Lichtquelle 3 ist, wie aus Figur 1 ersichtlich, derart relativ zu einem Krümmungsmittelpunkt M des Kugelspiegels 8 beabstandet, dass durch die Strahlablenkung beim Beleuchten des Kugelspiegels 8 und den damit einhergehenden Astigmatismus die Lichtscheibe 2 erzeugt wird. Dabei ist die Lichtquelle 3 wenigstens annähernd auf einer Ebene E senkrecht zu einer optischen Achse O des Kugelspiegels 8 angeordnet und ein von der Lichtquelle 3 ausgehender Hauptstrahl des Lichtbündels 4 auf einen Scheitelpunkt S des Kugelspiegels 8 ausgerichtet. Der Scheitelpunkt S und der Krümmungsmittelpunkt M des Kugelspiegels 8 liegen auf der optischen Achse O. Die Lichtquelle 3 ist im vorliegenden Ausführungsbeispiel derart angeordnet, dass der Einfallswinkel ϕ des Hauptstrahls der Lichtquelle 3 bzw. der Winkel ϕ zwischen der optischen Achse O und dem Hauptstrahl der Lichtquelle 3 22,5° beträgt. Beträgt der Winkel ϕ wie in vorliegender Figur gezeigt 22,5°, so ist die Ausdehnung der Lichtscheibe 2 4 mm groß. Die Ausdehnung bzw. Breite der Lichtscheibe 2 kann selbstverständlich auch variiert werden. Dies kann durch die Variation des relativen Abstandes der Lichtquelle 3 zum Krümmungsmittelpunkt M und durch die Variation des Winkels ϕ zwischen der optischen Achse O und dem Hauptstrahl der Lichtquelle 3 erfolgen. Der Winkel ϕ kann dabei z. B. zwischen 1° und 45° gewählt werden. Der entsprechende Abstand d der Lichtquelle 3 zum Krümmungsmittelpunkt M ergibt sich aus Krümmungsradius r · tan (ϕ).

Durch die außeraxiale Beleuchtung des Kugelspiegels 8 und die daraus resultierende Reflexion des Lichtbündels 4 durch den Kugelspiegel 8 entsteht ein Astigmatismus, welcher vorliegend erste und zweite Foki F1 und F2 erzeugt, wobei der zweite Fokus F2 eine Strahltaille der Lichtscheibe 2 bildet. Der zweite Fokus F2 kann vorliegend auf einer Geraden mit dem Krümmungsmittelpunkt M und der Lichtquelle 3 angeordnet sein, falls keine Umlenkung oder Faltung vorgesehen ist. Die Fokuslinie des Fokus F2 liegt in x-Richtung. Die Einschnürung des zweiten Fokus F2 ist vorliegend in z-Richtung also senkrecht zur Strahlrichtung und parallel zur Breitenausdehnung (x-Richtung) der Lichtscheibe 2 angeordnet. Eine entsprechende Seitenansicht des Bereichs B aus Figur 1 ist in Figur 2 gezeigt. Die Probenkapillare 11 kann vorzugsweise in diesem Bereich angeordnet werden, um eine möglichst feine und definierte Beleuchtung der jeweiligen Probenebene zu erhalten.

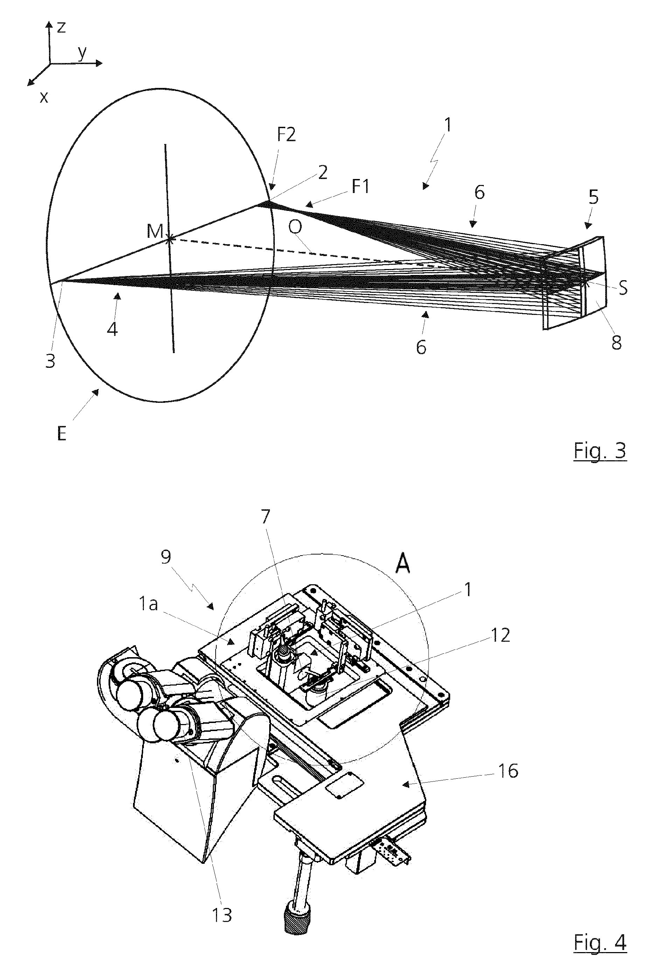

Figur 3 zeigt eine perspektivische Darstellung einer erfindungsgemäßen Vorrichtung 1 zur Beleuchtung der Probe mittels der Lichtscheibe 2 und einen damit einhergehenden Strahlengang 6. Funktionsgleiche Elemente sind in den Figuren mit denselben Bezugszeichen versehen.

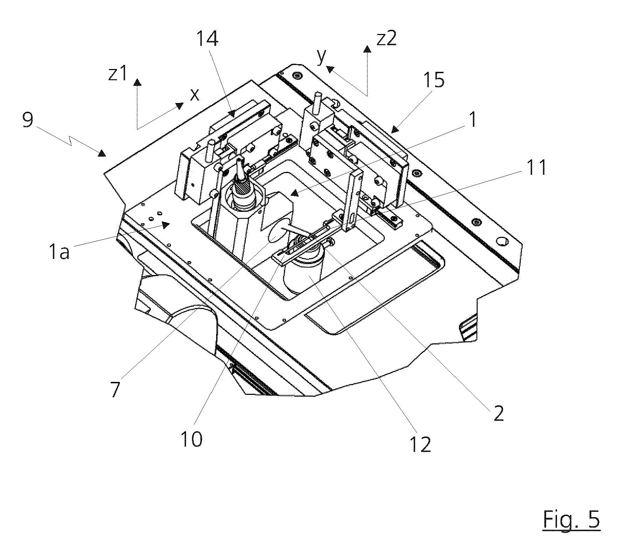

Die Figur 4 zeigt eine schematische Darstellung eines Mikroskops 9 zum Abbilden einer im Bereich eines Mikroskoptisches 16 in einer Objekthalterung 10 (siehe Figur 5) des Mikroskops 9 anordenbaren Probe, welche vorliegend in der Probenkapillare 11 eingebracht ist. Das Mikroskop 9 weist in einem separaten Modul 1a eine erfindungsgemäße Vorrichtung 1 zur im Wesentlichen flächenartigen Beleuchtung der Probenkapillare 11 in einer Beleuchtungsebene aus einer Richtung, sowie die Objekthalterung 10 auf. Die zu analysierende Probe kann in anderen nicht dargestellten Ausführungsbeispielen auch auf einem Objektträger, einer Küvette oder einer anderen Halterung angeordnet sein. Das vorliegende

Mikroskop ist als inverses Mikroskop 9 ausgebildet und weist die einem bekannten inversen Mikroskop 9 üblicherweise zugehörigen Komponenten, insbesondere ein Objektiv 12, einen Mikroskoptisch 16 und ein Okular 13 auf. Die erfindungsgemäße Vorrichtung 1 ist in dem Mikroskop 9 angeordnet. Die Figur 5 zeigt einen vergrößerten Ausschnitt A der erfindungsgemäßen Vorrichtung 1 in dem Mikroskop 9. Die durch die erfindungsgemäße Vorrichtung 1 erzeugte Lichtscheibe 2 dient der Beleuchtung der Probenkapillare 11. Ein Austrittsbereich der Lichtscheibe 2 ist mit dem Bezugszeichen 7 versehen. Um eine zu analysierende Probe mittels Lichtscheibenmikroskopie optimal auswerten zu können, muss die Ausrichtung der Probenkapillare 11 relativ zur Lichtscheibe 2, welche eine Probenebene der Probenkapillare 11 beleuchtet, sowie die Ausrichtung der Lichtscheibe 2 relativ zur Probenkapillare 11 in verschiedene Richtungen möglich sein. Dies geschieht im vorliegenden Ausführungsbeispiel anhand dem in dem separaten Modul 1a vorhandenen ersten Aktuator 14 zum relativen Verschieben oder, insbesondere linearen Positionieren der erfindungsgemäßen Vorrichtung 1 und dem in dem separaten Modul 1a vorhandenen zweiten Aktuator 15 zum relativen Verschieben oder, insbesondere linearen Positionieren der Probe bzw. der Probenkapillare 11. Die Aktuatoren sind im vorliegenden Beispiel als Linearpositionierer 14 und 15 ausgebildet. Selbstverständlich sind auch andere Aktuatoren zum Positionieren denkbar. Durch den Linearpositionierer 14 kann vorliegend die Lichtscheibe 2 in x-Richtung manuell und in z1-Richtung motorisch positioniert werden. Die Probenkapillare 11 wird durch den Linearpositionierer 15 in y-Richtung manuell und in z2-Richtung (unabhängig von der z1-Richtung) motorisch, positioniert. Die Richtungen x, y, z1 und z2 sind in Figur 5 mit entsprechenden Pfeilen gezeichnet, wobei die Richtungen von den in den

Figuren 1 bis 3 angedeuteten x-, y- und z-Achsen abweichen können.

Eine zu analysierende Probe kann dreidimensional aufgenommen werden, indem Bilder von äquidistanten Ebenen der Probe gespeichert werden (ein sogenannter z-Stapel). Dazu müssen die Lichtscheibe 2 und der Fokus des abbildenden Objektivs 12 in derselben Ebene liegen. Aufgrund des sogenannten Fishtank-Effekts ist eine gekoppelte z-Verstellung nicht ausreichend, hierbei sind die Brechungsindizes außerhalb und innerhalb der Kapillare sowie die numerische Apertur des Objektivs 12 zu berücksichtigen.

Damit gewährleistet ist, dass die Lichtscheibe 2 und der Fokus des abbildenden Objektivs 12 in derselben Ebene liegen, werden im vorliegenden Ausführungsbeispiel ausschließlich hochpräzise, motorische Linearpositionierer als Aktuatoren 14 und 15 verwendet. Der Mikroskoptisch 16 bzw. die Objektivfokussierung (hier nicht näher dargestellt) am Mikroskop 9 sind dabei nicht beteiligt. Die zunächst in vorteilhafter Weise völlig unabhängige Positionierung der Lichtscheibe 2 und der Probenkapillare 11 wird über eine mathematische Formel so miteinander verknüpft, dass die Lichtscheibe 2 und der Fokus des Objektivs 12 immer deckungsgleich in der zu analysierenden Probenkapillare 11 liegen. Ein entsprechendes zum Einsatz kommendes Computerprogramm bietet zwei Möglichkeiten. Zum einen können Brechungsindizes vorgegeben werden, wenn diese bekannt sind und zum anderen können zwei z-Positionen, vorzugsweise am unteren und am oberen Ende der Probenkapillare 11, angefahren werden und die Lichtscheibe 2 jeweils nachjustiert werden, bis die Beleuchtung optimal ist. Die Software ermittelt dann die richtigen Positionen für die dazwischen liegenden Ebenen entlang der z1-Richtung und z2-Richtung.

### Bezugszeichenliste

- 1: erfindungsgemäße Vorrichtung
- 1a: Modul
- 2: Lichtscheibe
- 3: Lichtquelle
- 4: Lichtbündel
- 5: Optik
- 6: Strahlengang
- 7: Austrittsbereich
- 8: Kugelspiegel
- 9: Mikroskop (invers)
- 10: Objekthalterung
- 11: Probenkapillare
- 12: Objektiv
- 13: Okular
- 14, 15: Aktuatoren
- 16: Mikroskoptisch
- A, B: Ausschnittbereiche
- E: Ebene
- F1, F2: Foki
- O: optische Achse
- M: Krümmungsmittelpunkt
- S: Scheitelpunkt
- ϕ: Einfallswinkel
- x,y,z,z1,z2: Achsen / Richtungen

## Patentansprüche

1. Vorrichtung (1) zur Beleuchtung einer Probe mittels einer Lichtscheibe (2), umfassend:
- wenigstens eine Lichtquelle (3) zur Erzeugung eines Lichtbündels (4), und
- eine Optik (5), welche zur Erzeugung der Lichtscheibe (2) aus dem Lichtbündel (4) ausgelegt ist, mit einem Strahlengang (6),
**dadurch gekennzeichnet, dass** die Optik (5) wenigstens ein reflektives, sphärisches optisches Element (8) aufweist, wobei die wenigstens eine Lichtquelle (3) derart relativ zu einem Krümmungsmittelpunkt (M) des wenigstens einen reflektiven, sphärischen optischen Elements (8) beabstandet angeordnet ist, dass durch die Strahlablenkung des wenigstens einen reflektiven, sphärischen optischen Elements (8) beim Beleuchten die Lichtscheibe (2) erzeugt wird.

2. Vorrichtung (1) nach Anspruch 1, wobei die Lichtquelle (3) wenigstens annähernd auf einer Ebene (E) angeordnet ist, welche senkrecht zu einer optischen Achse (O) des wenigstens einen reflektiven, sphärischen optischen Elements (8) ist.

3. Vorrichtung (1) nach Anspruch 1 oder 2, wobei ein Scheitelpunkt (S) und der Krümmungsmittelpunkt (M) des wenigstens einen reflektiven, sphärischen optischen Elements (8) auf einer optischen Achse (O) des wenigstens einen reflektiven, sphärischen optischen Elements (8) liegen.

4. Vorrichtung (1) nach Anspruch 1, 2 oder 3, wobei ein Hauptstrahl der Lichtquelle (3) auf einen Scheitelpunkt (S) des wenigstens einen reflektiven, sphärischen optischen Elements (8) gerichtet ist.

5. Vorrichtung (1) nach einem der Ansprüche 1 bis 4, wobei die Ausdehnung der Lichtscheibe (2) veränderbar ist, durch:
- eine Variation des relativen Abstands der wenigstens einen Lichtquelle (3) zu dem Krümmungsmittelpunkt (M) des wenigstens einen reflektiven, sphärischen optischen Elements (8), und/oder
- eine Variation eines Winkels (ϕ), welchen die optische Achse (O) des wenigstens einen reflektiven, sphärischen optischen Elements (8) und der Hauptstrahl der Lichtquelle (3) einschließen.

6. Vorrichtung (1) nach einem der Ansprüche 1 bis 5, wobei ein Einfallswinkel (ϕ) des Hauptstrahls der Lichtquelle (3) auf das wenigstens eine reflektive, sphärische optische Element (8) und/oder ein Winkel (ϕ), welchen die optische Achse (O) des wenigstens einen reflektiven, sphärischen optischen Elements (8) und der Hauptstrahl der Lichtquelle (3) einschließen, zwischen 1° und 45°, insbesondere 22,5° beträgt.

7. Vorrichtung (1) nach einem der Ansprüche 1 bis 6, wobei die Lichtquelle (3) eine Austrittsfläche eines Lichtwellenleiters (3) aufweist.

8. Vorrichtung (1) nach Anspruch 7, wobei der Lichtwellenleiter als Faser, vorzugsweise als Monomodefaser (3), insbesondere aus Glas und/oder Kunststoff ausgeführt ist.

9. Vorrichtung (1) nach einem der Ansprüche 1 bis 8, wobei das reflektive, sphärische, optische Element ein Kugelspiegel (8) ist.

10. Vorrichtung (1) nach Anspruch 9, wobei der Kugelspiegel (8) einen Krümmungsradius von 30 mm bis 60 mm, vorzugsweise 50 mm aufweist.

11. Vorrichtung (1) nach Anspruch 9 oder 10, wobei die optisch wirksame Fläche des Kugelspiegels (8) eine Bedampfung mit Aluminium aufweist.

12. Vorrichtung (1) nach Anspruch 9, 10 oder 11, wobei die optisch wirksame Fläche des Kugelspiegels (8) eine Oberflächengenauigkeit im Bereich von höchstens λ/4, vorzugsweise λ/8 aufweist, wobei λ die Wellenlänge der von der Lichtquelle (3) erzeugten Strahlung ist.

13. Vorrichtung (1) nach einem der Ansprüche 1 bis 12, wobei die Optik (5) ferner wenigstens ein Umlenkelement, insbesondere einen Umlenkspiegel und/oder wenigstens eine Aperturblende aufweist.

14. Mikroskop (9) zum Abbilden einer im Bereich eines Mikroskoptisches (16) des Mikroskops (9) anordenbaren Probe mit einer Vorrichtung (1) gemäß einem der Ansprüche 1 bis 13 zur im Wesentlichen flächenartigen Beleuchtung der Probe in einer Beleuchtungsebene mittels einer Lichtscheibe (2) aus wenigstens einer Richtung.

15. Mikroskop nach Anspruch 14, wobei die Vorrichtung (1) zur Beleuchtung der Probe und/oder die Probe mittels eines separaten Moduls (1a) in dem Mikroskop (9) angeordnet sind.

16. Mikroskop nach Anspruch 15, wobei das separate Modul (1a) wenigstens einen ersten Aktuator (14) zur Positionsänderung der Vorrichtung (1) zur Beleuchtung der Probe oder der Lichtscheibe (2) relativ zu der Probe und/oder wenigstens einen zweiten Aktuator (15) zur Positionsänderung der Probe relativ zu der Vorrichtung (1) zur Beleuchtung der Probe oder zu der Lichtscheibe (2), aufweist.
